## Europäisches Patentamt

## European Patent Office

## Office européen des brevets

(19)

(11) Veröffentlichungsnummer: **0 083 742**
**B1**

(12) **EUROPÄISCHE PATENTSCHRIFT**

(45) Veröffentlichungstag der Patentschrift:
**08.10.86**

(51) Int. Cl.⁴: **G 06 K 7/08,** G 06 K 13/08

(21) Anmeldenummer: **82111406.3**

(22) Anmeldetag: **09.12.82**

(54) **Magnetkartenlesegerät.**

<table>
<tr><td>(30) Priorität: <b>05.01.82 DE 3200106</b><br><b>07.06.82 DE 3221445</b></td><td>(73) Patentinhaber: <b>Dicom Electronics GmbH, Brauweiler Strasse 16, D-5000 Köln 40 (DE)</b></td></tr>
<tr><td>(43) Veröffentlichungstag der Anmeldung:<br><b>20.07.83 Patentblatt 83/29</b></td><td>(72) Erfinder: <b>Dinges, Wolfgang, Kurfürstenstrasse 18, D-5024 Pulheim 2 (DE)</b></td></tr>
<tr><td>(45) Bekanntmachung des Hinweises auf die Patenterteilung:<br><b>08.10.86 Patentblatt 86/41</b></td><td>(74) Vertreter: <b>Zapf, Christoph et al, Patentanwälte Dr. Solf und Zapf Schlossbleiche 20, D-5600 Wuppertal 1 (DE)</b></td></tr>
<tr><td>(84) Benannte Vertragsstaaten:<br><b>AT BE CH DE FR GB IT LI LU NL SE</b></td><td></td></tr>
<tr><td>(56) Entgegenhaltungen:<br><b>DE - A - 2 356 695</b><br><b>DE - B - 2 705 534</b><br><b>FR - A - 2 356 206</b><br><b>US - A - 4 197 988</b></td><td></td></tr>
</table>

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Kartenlesegerät, bestehend aus einem Gehäuse mit einer Einstecköffnung, einer Kartenführung zur Aufnahme einer Signalkarte durch die Einstecköffnung und einem über der Führung angeordneten Abtastkopf, so dass die Signalspur der Signalkarte abgetastet werden kann, wobei der Abtastkopf in Kartenlängsrichtung derart verschiebbar gelagert ist, dass er beim Einstecken der Signalkarte von dieser entgegen der Kraft einer Feder in Einsteckrichtung verschoben und in einer Endposition von der Signalkarte gelöst wird und aufgrund der Federkraft die ruhende Signalkarte in zur Einsteckrichtung entgegengesetzter Richtung abtastet.

Aus der DE-A 2 356 695 ist ein Kartenlesegerät der eingangs genannten Art bekannt, das einen mechanisch arbeitenden Abtastkopf aufweist. Der Abtastkopf besitzt Kontakte, die Erhebungen einer in das Kartenlesegerät eingeschobenen Signalkarte abtasten. Der Abtastkopf wird entgegen der Kraft einer Feder beim Einstecken der Signalkarte durch diese verschoben und aus einer Endposition heraus zur Abtastung der ruhenden Signalkarte aufgrund der Federkraft entgegen der Einsteckrichtung der Signalkarte an dieser entlanggeführt. Die Feder ist als schlaufenartig gebogener Federdraht ausgebildet, der beim Spannen etwa oval verformt wird. Eine derartige Feder besitzt eine Federcharakteristik, die nicht zu einer konstanten Abtastgeschwindigkeit des Abtastkopfes führt; vielmehr wird sich der Abtastkopf ungleichmässig beschleunigt an der Signalkarte entlangbewegen, was eine exakte Datenerfassung erschwert und zu Abtastfehlern führen kann. Auch eine als Kolben-Zylinder-Einheit ausgebildete Dämpfungsvorrichtung des bekannten Kartenlesegerätes, die mit dem Abtastkopf zusammenwirkt, kann nur eine gewisse Vergleichsmässigung der Abtastgeschwindigkeit, nicht jedoch eine gleichförmige Bewegung schaffen, so dass die Abtastschwierigkeiten erhalten bleiben. Die Dämpfungsvorrichtung soll ausserdem ein Flattern des Abtastkopfes beim Abtastvorgang verhindern; denn da keine formschlüssige Verbindung zwischen der Feder und dem Abtastkopf vorgesehen ist, ist ein Abprellen des Abtastkopfes während des Abtastvorganges an der Feder möglich, und ferner kann es zu einer unregelmässigen, nicht jeweils reproduzierbaren Anlage zwischen Feder und Abtastkopf kommen. Die Dämpfungsvorrichtung führt zu einer relativ aufwendigen Konstruktion und verteuert das bekannte Kartenlesegerät. Ferner erfordert der schlaufenartig ausgebildete Federdraht sehr viel Platz, so dass das bekannte Kartenlesegerät grosse bauliche Abmessungen, insbesondere eine grosse Baulänge, aufweist.

Ausgehend von dem eingangs genannten Kartenlesegerät liegt der vorliegenden Erfindung die Aufgabe zugrunde, ein Kartenlesegerät für Magnetkarten zu schaffen, das sich durch eine exakte Abtastung der Magnetkarten, äusserst kompakte Abmessungen sowie durch eine einfache und kostengünstige Konstruktion auszeichnet.

Diese Aufgabe wird erfindungsgemäss dadurch gelöst, dass der Abtastkopf als Magnetkartenlesekopf ausgebildet ist und die Feder aus einer auf einer Tragrolle aufgewickelten Federband-Spiralfeder besteht, die einendig mit dem Magnetkartenlesekopf und anderendig mit dem Gehäuse verbunden ist und dem Magnetkartenlesekopf eine gleichmässige Abtastgeschwindigkeit über den gesamten Abtastweg erteilt. Durch die erfindungsgemässe Federausbildung wird der als Magnetkartenlesekopf ausgebildete Abtastkopf mit konstanter Geschwindigkeit an der Signalkarte entlanggeführt. Dieses wird dadurch bewirkt, dass sich durch das während des Abtastvorganges erfolgende zunehmende Aufwickeln der Federband-Spiralfeder der mit der Federkraft zusammenwirkende Hebelarm (Radius des Federbandwickels) derart ändert, dass eine gleichförmige Bewegung des Magnetkartenlesekopfes über den gesamten Abtastweg erfolgt. Hierdurch ist eine exakte, fehlerfreie Abtastung der Magnetkarte sichergestellt. Der Federband-Spiralfeder-Antrieb erfordert nur sehr wenig Raum, so dass das erfindungsgemässe Kartenlesegerät äusserst kompakt aufgebaut und in seinen Abmessungen nahezu den Abmessungen der Magnetkarte angeglichen ist. Da die Federband-Spiralfeder einendig mit dem Magnetkartenlesekopf und anderendig mit dem Gehäuse verbunden ist, kann ein beim Stand der Technik auftretendes Abprellen des Lesekopfes von der Feder und eine unregelmässige, nicht jeweils reproduzierbare Anlage dieser beiden Teile nicht auftreten. Eine Dämpfungsvorrichtung ist daher nicht erforderlich, so dass das erfindungsgemässe Kartenlesegerät konstruktiv einfach und kostengünstig hergestellt werden kann.

Aus der DE-B 2 705 534 ist ein Datenlesegerät bekannt, bei dem die Abtastbewegung des Abtastkopfes durch einen Antrieb aus einer Spiralfeder und einem Schrittschaltwerk mit einer Zahnstange erfolgt. Der Abtastkopf führt dabei eine schrittweise Abtastbewegung durch, so dass hier ein grundsätzlicher Unterschied zur Erfindung vorliegt.

Vorteilhafte Ausgestaltungen der Erfindung sind in den Unteransprüchen 2 bis 10 enthalten.

Die Zeichnungen veranschaulichen die Erfindung an einem Ausführungsbeispiel, und zwar zeigt:

Fig. 1 eine perspektivische Explosions-Ansicht eines erfindungsgemässen Kartenlesegerätes,

Fig. 2 einen Längsschnitt durch das Kartenlesegerät gemäss Fig. 1 im gebrauchsfertigen Zustand,

Fig. 3 einen Schnitt entlang der Schnittlinie IX–IX in Fig. 2,

Fig. 4 einen Schnitt entlang der Schnittlinie X–X in Fig. 2,

Fig. 5 einen Schnitt entlang der Schnittlinie XI–XI in Fig. 2, und

Fig. 6 bis 8 schematische Darstellungen des Kartenlesegerätes gemäss Fig. 1 zur Funktionsdarstellung desselben.

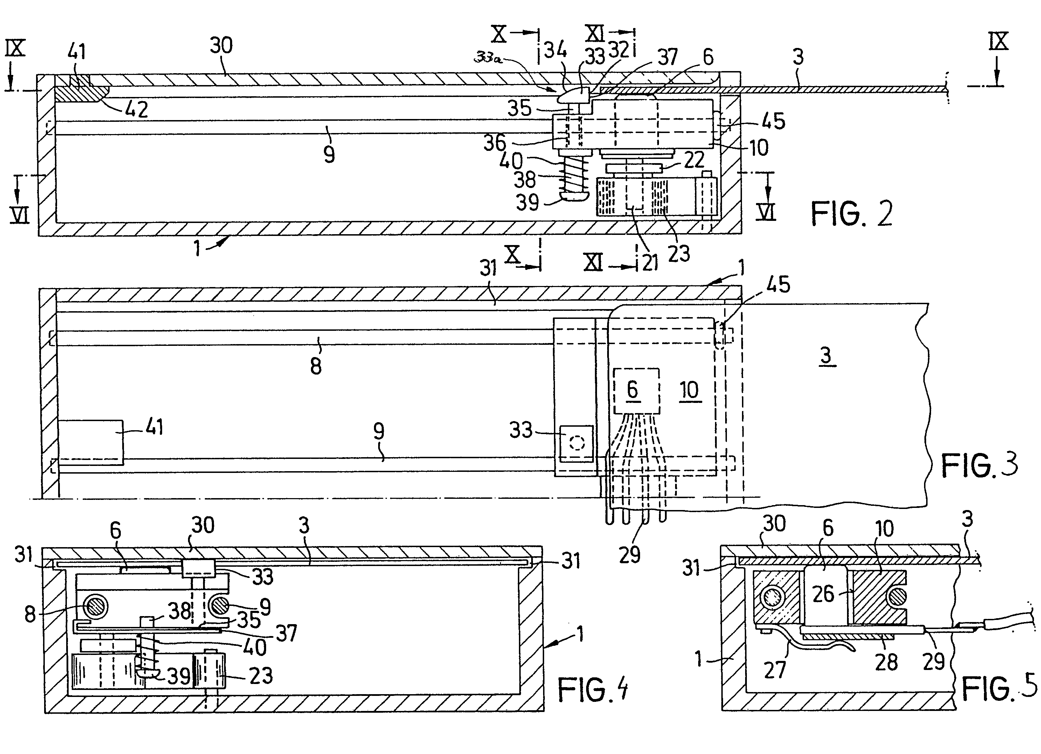

In den Figuren ist eine Ausführungsform eines erfindungsgemässen Magnetkartenlesegerätes dargestellt, das ein Gehäuse 1 mit einer Einstecköffnung 2 für eine Magnetkarte 3 aufweist. Innerhalb des Gehäuses 1 befinden sich in Fortsetzung der Einstecköffnung 2 Führungen für die Magnetkarte 3. Ferner ist innerhalb des Gehäuses 1 ein Magnetkartenlesekopf 6 mit einem durch zwei parallele Führungsstangen 8, 9 geführten Tragkörper 10 angeordnet. Hierzu weist der Tragkörper 10 als Führung eine Durchgangsbohrung 11 sowie eine randoffene Nut 12 auf, durch die die Führungsstangen 8, 9 jeweils verlaufen. An der Unterseite des Tragkörpers 10 weist dieser einen Lagerzapfen 21 auf, auf dem eine Tragrolle 22 drehbar befestigt ist. Auf dieser Tragrolle ist eine Federband-Spiralfeder 23 aufgewickelt und mit ihrem inneren Ende an der Tragrolle 22 befestigt. Mit ihrem äusseren Ende 24 ist die Federband-Spiralfeder 23 am Gehäuse 1 unterhalb der Einstecköffnung 2 für die Magnetkarte 3 befestigt. Das Federband der Spiralfeder 23 ist senkrecht ausgerichtet, so dass es parallel zu den Seitenwänden 25 des Gehäuses 1 verläuft. Der Magnetkartenlesekopf 6 ragt aus der Oberseite des Tragkörpers 10 heraus und ist in diesem geführt und federnd gelagert (Fig. 5). Zur Führung dient eine der Form des Magnetkartenlesekopfes 6 angepasste Durchgangsöffnung 26 des Tragkörpers 10. Die federnde Lagerung wird mit einer Blattfeder 27 bewirkt, die an der Unterseite des Tragkörpers 10 befestigt ist und mit ihrem freien, abgekröpften Ende über eine Druckplatte 28, die gegen eine Kontaktfahne 29 des Magnetkartenlesekopfes 6 anliegt, auf diesen einwirkt. Durch diese Lagerung des Magnetkartenlesekopfes 6 liegt dieser federnd an der Magnetspur der Magnetkarte 3 an. Das Gehäuse 1 ist durch einen Deckel 30 von oben verschlossen. Dieser stellt gleichzeitig die obere Begrenzung für die in den Längswänden 25a des Gehäuses 1 ausgebildeten Führungsnuten 31 dar, in denen die Magnetkarte 3 mit ihren Längsrändern geführt ist. Die Nutgrösse ist der Dicke der Magnetkarte 3 derart angepasst, dass diese mit nur geringem Spiel in den Führungsnuten 31 geführt ist.

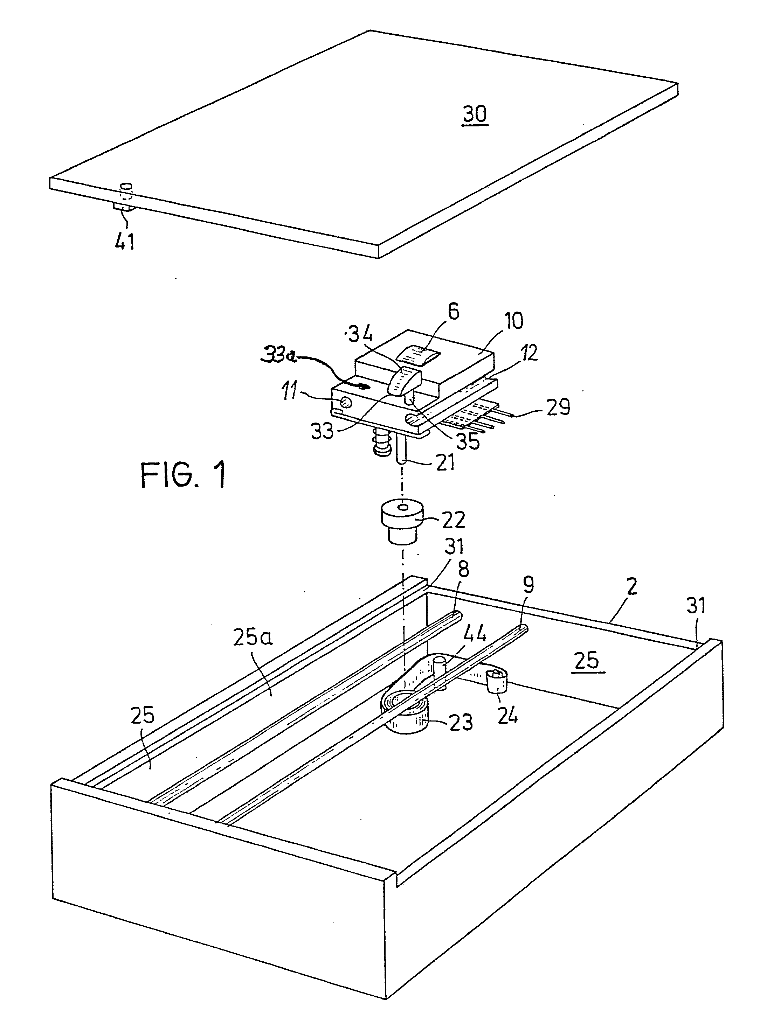

In dem Tragkörper 10 ist weiterhin ein Anschlag 33a gelagert (Fig. 1 und 2). Dieser Anschlag 33a besteht aus einem oberen Anschlagkörper 33 und einem mit diesem verbundenen Führungsstift 35, der durch eine Bohrung 36 des Tragkörpers 10 verläuft. Der Anschlagkörper 33 weist eine Anschlagfläche 32 für die Magnetkarte 3 auf, die senkrecht zur Verschieberichtung des Tragkörpers 10 verläuft sowie parallel zur Querkante der eingeschobenen Magnetkarte 3. Der Führungsstift 35 ist in der Bohrung 36 verschiebbar geführt und in axialer Richtung federnd gelagert. Hierzu dient eine an der Unterseite des Tragkörpers 10 einendig befestigte elastische Zunge 37, die gegen das aus dem Tragkörper 10 nach unten herausragende Ende des Führungsstiftes 36 anliegt. Durch eine Öffnung in der Zunge 37 verläuft ein Lagerstift 38, der einendig im Tragkörper 10 befestigt ist und am gegenüberliegenden Ende einen Kopf 39 besitzt. Zwischen dem Kopf 39 und der Zunge 37 ist koaxial um den Lagerstift 38 herum eine Druck

feder 40 angeordnet, gegen deren Federkraft die Zunge 37 und damit auch der Führungsstift 35 bewegbar sind.

Der Anschlagkörper 33 am oberen Ende des Führungsstiftes 35 weist eine abgeschrägte, zur Anlagefläche 32 ansteigende Kopffläche 34 auf. Der Anschlag 33a wirkt mit einem Gegenanschlag 41 im Gehäuse 1 an der der Einstecköffnung 2 gegenüberliegenden Gehäuseseite zusammen. Dieser Gegenanschlag 41 ist am Deckel 30 befestigt. Die dem Tragkörper 10 zugewandte Kante 42 des Gegenanschlags 41 ist gleichsinnig wie die Kopffläche 34 des Anschlagkörpers 33 abgeschrägt und wirkt mit dieser derart zusammen, dass beim Andrücken des Anschlages 33a gegen den Gegenanschlag 41 der Führungsstift 35 nach unten gegen die Kraft der Druckfeder 40 bewegt wird.

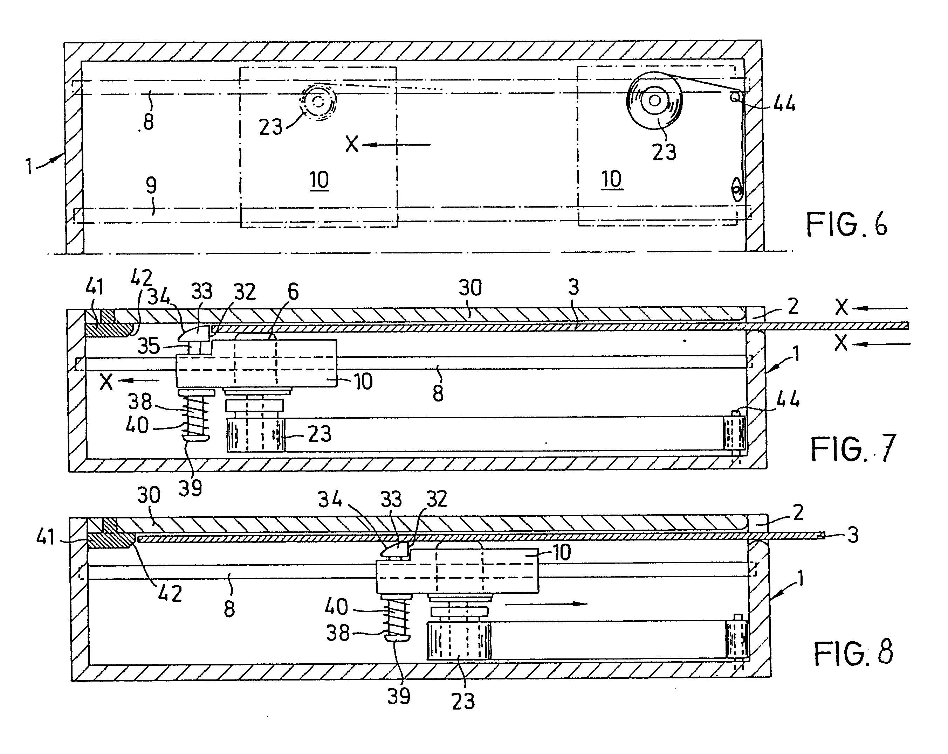

Die Funktion des erfindungsgemässen Magnetkartenlesegeräts ist in den Fig. 6 bis 8 dargestellt. Die Magnetkarte 3 wird durch die Einstecköffnung 2 eingesteckt. Dabei kommt sie mit ihrer Vorderkante zur Anlage an die Anschlagfläche 32 des Anschlagkörpers 33. Hierdurch wird der gesamte Tragkörper 10 mit dem Lesekopf 6 beim Weiterhereinschieben der Magnetkarte 3, siehe Pfeilrichtung X in Fig. 7, durch die Magnetkarte 3 mitgenommen. Hierbei wickelt sich die Federband-Spiralfeder 23 von der Tragrolle 22 ab. Damit das abgewickelte Federband im wesentlichen parallel zu den Führungsstangen 8, 9 verläuft, ist es um einen Umlenkstift 44 geführt, der etwa gegenüber der Drehachse der Lagerrolle 22 unterhalb der Einstecköffnung 2 im Gehäuseboden des Gehäuses 1 befestigt ist. Die Magnetkarte 3 wird soweit eingeschoben, bis sie mit ihrer Vorderkante am Gegenanschlag 41 anliegt (Fig. 8). Bevor es zu dieser Anlage kommt, wird zunächst durch den Gegenanschlag 41 der Anschlagkörper 33 nach unten gedrückt, und zwar durch das Zusammenwirken der Kopffläche 34 und der abgeschrägten Kante 42 des Gegenanschlags 41. Hierdurch wird der Tragkörper 10 ausgelöst, so dass im Anlagemoment der Magnetkarte 3 am Gegenanschlag 41 der Magnetkartenlesekopf 6 in Bewegung gesetzt wird und nun die stillstehende Magnetkarte 3 abtasten kann. Die Rückbewegung des Tragkörpers 10 mit dem Magnetkartenlesekopf 6 wird durch die Rückstellkraft der abgewickelten Federband-Spiralfeder 23 bewirkt. Dabei ist erfindungsgemäss die Federband-Spiralfeder 23 derart dimensioniert, dass eine gleichmässige Abtastgeschwindigkeit über den gesamten Abtastweg erzeugt wird. Die Magnetkarte 3 ist in den Führungen 31 derart gehalten, dass sie nicht durch die durch den Magnetkartenlesekopf 6 erzeugte Reibungskraft mitgenommen wird. Dies wird durch einen Haftsitz der Magnetkarte 3 innerhalb der Führungen 31 im Gehäuse erreicht. Nachdem der Tragkörper 10 wieder in seine Ausgangsstellung durch Anschlag an einen Puffer 45 zurückgeführt ist, ist der Abtastvorgang beendet, und die Magnetkarte 3 kann herausgezogen werden. Dabei ist dann der Anschlagkörper 33 durch die Einwirkung der Feder 40 in seine Ausgangsstellung zu

rückgekehrt, so dass seine Anschlagfläche 32 wieder oberhalb der Abtastebene des Magnetkartenlesekopfes 6 liegt.

Eine Verwendungsmöglichkeit eines erfindungsgemässen Kartenlesegeräts besteht, da sich durch die erfindungsgemässe Ausgestaltung eine sehr kompakte Bauform des Lesegerätes ergibt, beispielsweise in Verbindung mit Autotelefonen.

**Patentansprüche**

1. Kartenlesegerät, bestehend aus einem Gehäuse mit Einstecköffnung, einer Kartenführung zur Aufnahme einer Signalkarte durch die Einstecköffnung und einem über der Führung angeordneten Abtastkopf, so dass die Signalspur der Signalkarte abgetastet werden kann, wobei der Abtastkopf in Kartenlängsrichtung derart verschiebbar gelagert ist, dass er beim Einstecken der Signalkarte von dieser entgegen der Kraft einer Feder in Einsteckrichtung verschoben und in einer Endposition von der Signalkarte gelöst wird und aufgrund der Federkraft die ruhende Signalkarte in zur Einsteckrichtung entgegengesetzter Richtung abtastet, dadurch gekennzeichnet, dass der Abtastkopf als Magnetkartenlesekopf (6) ausgebildet ist und die Feder aus einer auf einer Tragrolle (22) aufgewickelten Federband-Spiralfeder (23) besteht, die einendig mit dem Magnetkartenlesekopf (6) und anderendig mit dem Gehäuse (1) verbunden ist und dem Magnetkartenlesekopf (6) eine gleichmässige Abtastgeschwindigkeit über den gesamten Abtastweg erteilt.

2. Kartenlesegerät nach Anspruch 1, dadurch gekennzeichnet, dass der Magnetkartenlesekopf (6) an zwei parallelen, in Kartenlängsrichtung verlaufenden Führungsstangen (8, 9) verschiebbar geführt ist.

3. Kartenlesegerät nach Anspruch 1 oder 2, dadurch gekennzeichnet, dass der Magnetkartenlesekopf (6) senkrecht zur Verschieberichtung federnd gelagert ist.

4. Kartenlesegerät nach einem der Ansprüche 1 bis 3, dadurch gekennzeichnet, dass der Magnetkartenlesekopf (6) auf einem Tragkörper (10) befestigt ist, der Führungen für die Führungsstangen (8, 9) besitzt.

5. Kartenlesegerät nach Anspruch 4, dadurch gekennzeichnet, dass zwei Führungen vorgesehen sind, wobei die eine Führung als Durchgangsbohrung (11) und die andere Führung als randoffene Nut (12) ausgebildet ist.

6. Kartenlesegerät nach Anspruch 5, dadurch gekennzeichnet, dass die Federband-Spiralfeder (23) auf der Tragrolle (22) an der Unterseite des Tragkörpers (10) angeordnet und dass die Befestigung des äusseren Endes (24) der Feder (23) am Gehäuse unterhalb der Einstecköffnung (2) für die Magnetkarte (3) angeordnet ist.

7. Kartenlesegerät nach einem der Ansprüche 1 bis 6, dadurch gekennzeichnet, dass am Tragkörper (10) ein Anschlag (33a) für die Magnetkarte (3) senkrecht zur Verschieberichtung gegen die Kraft einer Feder (40) verschiebbar gelagert ist.

8. Kartenlesegerät nach Anspruch 7, dadurch gekennzeichnet, dass am Gehäuse (1), vorzugsweise am Gehäusedeckel (30), ein Gegenanschlag (41) für den Anschlag (33a) an der der Einstecköffnung (2) gegenüberliegenden Gehäuseseite angeordnet ist.

9. Kartenlesegerät nach Anspruch 8, dadurch gekennzeichnet, dass der Anschlag (33a) an seinem Anschlagkörper (33) eine abgeschrägte Kopffläche (34) besitzt, die mit einer gleichsinnig abgeschrägten Kante (42) des Gegenanschlags (41) zum Absenken des Anschlagkörpers (33) unter die Magnetkarte (3) zusammenwirkt.

10. Kartenlesegerät nach einem oder mehreren der Ansprüche 1 bis 9, dadurch gekennzeichnet, dass am Gehäusedeckel eine die Magnetkarte im eingeschobenen Zustand klemmend haltende Blattfeder befestigt ist.

**Claims**

1. Card reading apparatus comprising a casing having an insertion opening, a guide for receiving a signal card through the opening and a scanning head disposed above the guide so that the track of the signal card can be scanned, the scanning head being mounted so as to be movable in the longitudinal direction of the card so that when the card is inserted, it is pushed by the card in the insertion direction against the force of a spring and released by the card in an end position and as a result of the spring force the head scans the stationary signal card in the opposite direction to the insertion direction, characterised in that the scanning head is constructed as a magnetic-card reading head (6) and the spring is a spring-band steel spiral spring (23) wound on to a bearing roller (22) and connected at one end to the magnetic-card reading head (6) and at the other end to the casing (1) and driving the head (6) at a uniform speed along the entire scanning distance.

2. Card reading apparatus according to claim 1, characterised in that the head (6) is movably guided along two parallel guide rods (8, 9) extending in the longitudinal direction of the card.

3. Card reading apparatus according to claim 1 or 2, characterised in that the head (6) is resiliently mounted at right angles to the direction in which it is moved.

4. Card reading apparatus according to any of claims 1 to 3, characterised in that the head (6) is secured to a bearing member (10) having guides for the guide rods (8, 9).

5. Card reading apparatus according to claim 4, characterised in that two guides are provided, one guide being a through bore (11) and the other guide being a groove (12) open at the edges.

6. Card reading apparatus according to claim 5, characterised in that the spiral spring (23) is disposed on the bearing roller (22) on the underside of the bearing member (10) and the outer end (24) of the spring (23) is secured to the casing at a place below the insertion opening (2) for the magnetic card (3).

7 **0 083 742** 8

7. Card reading apparatus according to any of claims 1 to 6, characterised in that the bearing member (10) has an abutment (33a) for the magnetic card (3) and mounted so as to be movable at right angles to the direction of motion against the force of a spring (40).

8. Card reading apparatus according to claim 7, characterised in that a counter-abutment (41) for the abutment (33a) is disposed on the casing (1), preferably on the casing cover (30), on the side of the casing remote from the insertion opening (2).

9. Card reading apparatus according to claim 8, characterised in that the abutment member (33) of the abutment (33a) has a bevelled head surface (34) co-operating a similarly bevelled edge (42) of the counter-abutment (41) for lowering the abutment member (33) under the magnetic card (3).

10. Card reading apparatus according to one or more of claims 1 to 9, characterised in that a leaf spring holding and clamping the magnetic card in the inserted position is secured to the casing cover.

**Revendications**

1. Appareil de lecture de cartes comprenant un boîtier ayant une ouverture d'introduction, un dispositif de guidage pour accueillir une carte support d'information par l'ouverture d'introduction et un palpeur disposé au-dessus du dispositif de guidage pour pouvoir lire le tracé de la carte, ledit palpeur étant disposé pour être déplacé, dans le sens longitudinal de la carte, de manière telle qu'à l'introduction de la carte support d'information, il soit déplacé par cette dernière, contre la force d'un ressort, dans le sens d'introduction et détaché, dans une position extrême, de la carte support d'information et lise, grâce à la force du ressort, la carte support d'information au repos dans la direction opposée à celle de son introduction, caractérisé en ce que le palpeur a la forme d'une tête de lecture de cartes magnétiques (6) et que le ressort consiste en un ressort hélicoïdal se présentant sous forme d'une bande (23) qui est enroulée sur un rouleau de support (22), une extrémité de ce ressort étant reliée à la tête de lecture de cartes magnétiques (6) et l'autre au boîtier (1), ce ressort conférant à la tête de lecture (6) une vitesse de lecture constante sur tout le trajet de lecture.

2. Appareil de lecture de cartes selon la revendication 1, caractérisé en ce que la tête de lecture de cartes magnétiques (6) est guidée coulissante sur deux tiges de guidage (8, 9) parallèles s'étendant dans la direction longitudinale de la carte.

3. Appareil de lecture de cartes selon la revendication 1 ou 2, caractérisé en ce que la tête de lecture de cartes magnétiques (6) est disposée élastiquement, perpendiculairement à la direction de déplacement.

4. Appareil de lecture de cartes selon l'une des revendications 1 à 3, caractérisé en ce que la tête de lecture de cartes magnétiques (6) est fixée sur un corps de support (10) muni de guidages pour les tiges de guidage (8, 9).

5. Appareil de lecture de cartes selon la revendication 4, caractérisé en ce que deux guidages sont prévues dont l'un a la forme d'un alésage (11) traversant et l'autre d'une rainure (12) à bords ouverts.

6. Appareil de lecture de cartes selon la revendication 5, caractérisé en ce que le ressort hélicoïdal en bande (23) est disposé sur le rouleau de support (22), sur la face inférieure du corps de support (10) et que la fixation de l'extrémité extérieure (24) du ressort (23) est placée sur le boîtier en dessous de l'ouverture d'introduction (2) de la carte magnétique (3).

7. Appareil de lecture de cartes selon l'une des revendications 1 à 6, caractérisé en ce qu'une butée (33a) pour la carte magnétique (3) est disposée au corps de support (10) perpendiculairement à la direction de déplacement et mobile contre la force d'un ressort (40).

8. Appareil de lecture de cartes selon la revendication 7, caractérisé en ce que, sur le boîtier (1) et, de préférence, sur le couvercle (30) du boîtier, une contre-butée (41) pour la butée (33a) est disposée sur le côté du boîtier faisant face à l'ouverture d'introduction (2).

9. Appareil de lecture de cartes selon la revendication 8, caractérisé en ce que la butée (33a) possède, sur son corps de butée (33), une face frontale (34) inclinée qui coopère avec un bord (42) incliné dans la même direction de la contre-butée (41) pour amener la butée (33) sous la carte magnétique (3).

10. Appareil de lecture de cartes selon l'une ou plusieurs des revendications 1 à 9, caractérisé en ce que sur le couvercle du boîtier est fixée une lame élastique qui maintient la carte magnétique serrée après son introduction.

FIG. 1

FIG. 2

FIG. 3

FIG. 4

FIG. 5

0 083 742

FIG. 6

FIG. 7

FIG. 8

0 083 742